# FASCICULE DE BREVET EUROPEEN

(11) **EP 4 469 744 B1**
(45) Date de publication et mention de la délivrance du brevet: **19.11.2025**
(21) Numéro de dépôt: 22843350.4
(22) Date de dépôt: 22.12.2022
(51) Int. Cl.: F28D 9/00, F28D 21/00, F28F 9/00

(54) **ÉCHANGEUR DE CHALEUR COMPRENANT AU MOINS UNE PLAQUE LATÉRALE D'ENCAPSULAGE, SYSTÈME DE CONDITIONNEMENT D'AIR ET VÉHICULE**
WÄRMETAUSCHER MIT MINDESTENS EINER SEITLICHEN ABDECKPLATTE, KLIMAANLAGE UND FAHRZEUG
HEAT EXCHANGER COMPRISING AT LEAST ONE LATERAL ENCASULATION PLATE, AIR CONDITIONING SYSTEM AND VEHICLE

(30) Priorité: 27.01.2022 FR 2200723
(43) Date de publication de la demande: 04.12.2024
(73) Titulaire: Liebherr-Aerospace Toulouse SAS, 31016 Toulouse Cedex 2 (FR)
(72) Inventeur: BONNIVARD, Florian, 31016 TOULOUSE CEDEX 2 (FR); RAMOUSSE, Arnaud, 31016 TOULOUSE CEDEX 2 (FR); RICARD, Didier, 31016 TOULOUSE CEDEX 2 (FR)
(74) Mandataire: Bringer IP
(86) Numéro de dépôt international: PCT/EP2022/087635
(87) Numéro de publication internationale: WO 2023/143841

(56) Documents cités:
- IT-A1- UB20 160 428
- US-A- 5 823 247
- US-A1- 2021 199 392
- US-B2- 6 401 802

## Description

### Domaine technique de l'invention

L'invention concerne un échangeur de chaleur. En particulier, l'invention concerne un échangeur de chaleur à plaques et ailettes pouvant être utilisé dans un système de conditionnement d'air, par exemple dans un véhicule aérien, ferroviaire ou terrestre.

L'invention concerne en particulier un échangeur de chaleur à plaques, deux fluides caloporteurs différents circulant entre lesdites plaques de façon à refroidir ou à réchauffer un premier fluide à l'aide d'un deuxième fluide, les deux fluides étant séparés l'un de l'autre par des plaques au contact desquelles s'effectue ledit échange thermique.

### Arrière-plan technologique

Les échangeurs de chaleur sont utilisés pour permettre un transfert thermique entre au moins deux fluides, en particulier pour refroidir ou réchauffer l'un des fluides à l'aide d'un autre fluide. Les échangeurs de chaleur sont utilisés dans de nombreux contextes, et notamment dans les systèmes de conditionnement d'air pour véhicule aérien, ferroviaire ou terrestre, dans lesquels ils permettent notamment de réguler la température de l'air conditionné par le système de conditionnement d'air à différentes étapes du conditionnement.

La plupart des échangeurs de chaleur actuellement utilisés à bord des aéronefs sont formés d'une chambre d'échanges thermiques de forme généralement rectangulaire qui loge un empilement de plaques et d'ailettes (aussi désigné par le terme « faisceau » de plaques ou d'ailettes) qui forment des canaux de circulation empilés, alternativement pour la passe chaude et pour la passe froide. Ainsi, la passe chaude qui alimente une face de l'échangeur circule dans les canaux des différentes couches et la passe froide qui alimente une face de l'échangeur circule dans les canaux intercalés entre deux canaux de la passe chaude.

Cette architecture permet d'intercaler chaque canal chaud entre deux canaux froids sur toute la longueur ou hauteur de l'échangeur et donc d'assurer des échanges thermiques entre les deux fluides.

Différentes configurations de circulation des deux fluides au sein de cet empilement de plaques et d'ailettes sont possibles. Les échangeurs de chaleur à flux croisés sont configurés de telle sorte que le circuit chaud et le circuit froid sont transverses l'un par rapport à l'autre. Il existe également des échangeurs présentant des configurations de circulation plus complexes. Parmi ceux-ci, il existe notamment des échangeurs de chaleur dont les circuits chaud et froid sont à contre-courants, c'est-à-dire que les flux d'air chaud et froid suivent des directions parallèles inverses l'une de l'autre.

Dans ces échangeurs de chaleur certaines faces ou portions, au travers desquelles il n'est pas prévu une entrée ou une sortie pour la passe chaude ou pour la passe froide, sont formées d'une succession de barres de fermeture correspondant à la passe chaude et à la passe froide. US 3 613 782 propose par exemple un échangeur de chaleur à contre-courants présentant une configuration en Z ou en U comprenant de telles portions munies de barres de fermetures.

Un tel mur de barres (ou de barrettes) de fermeture chaudes et froides entraîne une importante rigidité locale. Sous l'effet des sollicitations mécaniques et/ou thermiques auxquelles sont soumis les échangeurs de chaleur, en particulier lorsqu'ils sont intégrés dans des véhicules atmosphériques, une telle rigidité locale augmente les risques de fuite de fluide.

Par ailleurs, IT UB20 160 428 décrit un échangeur de chaleur à plaques, chaque plaque étant munie de moyens d'emboîtement et de maintien entre feuilles superposées, ces moyens comprenant sur au moins une partie de deux bords opposés de la feuille des rabats, réalisés par pliage ou par apposition d'éléments rapportés. Il comprend des profils de connexion linéaires supplémentaires formant des brides de connexion des conduits acheminant les fluides vers les sections d'entrée et vers les sections de sortie des fluides primaires et secondaires.

US 2021/199392 décrit un échangeur de chaleur à plaques et ailettes dans lequel des barres de fermetures sont toujours prévues sur les troisièmes et quatrièmes faces.

US 5 823 247 décrit un échangeur de chaleur à plaques comprenant un empilement de plaques parallèles entre elles entre une première et une deuxième plaque de maintien dans lesquelles sont prévues des ouvertures. Les plaques forment des parois de chambres d'entrée et de sortie des fluides.

L'invention vise donc à proposer un échangeur de chaleur permettant de pallier ces inconvénients.

### Objectifs de l'invention

L'invention vise à fournir un échangeur de chaleur présentant un très faible risque de fuite de fluide.

L'invention vise en particulier à fournir un échangeur de chaleur présentant une excellente cohésion structurelle stable au cours du temps.

L'invention vise également à fournir un échangeur de chaleur présentant une excellente efficacité.

### Exposé de l'invention

Pour ce faire, l'invention concerne un échangeur de chaleur à plaques, configuré pour un échange thermique entre un premier fluide circulant dans une première passe et un deuxième fluide circulant dans une deuxième passe, les fluides circulant entre deux plaques externes, comprenant un bloc échangeur à plaques comprenant une pluralité de plaques internes disposées sensiblement parallèlement les unes par rapport aux autres, lesdites plaques internes étant disposées sensiblement parallèlement aux plaques externes,
caractérisé en ce qu'il comprend au moins une plaque latérale d'encapsulage s'étendant sensiblement orthogonalement auxdites plaques internes, chaque plaque latérale d'encapsulage étant fixée au contact desdites plaques externes, de façon à obturer latéralement ladite deuxième passe.

Un échangeur de chaleur selon l'invention permet donc de remplacer au moins en partie les barres de fermeture obturant l'une des passes de fluide de l'échangeur de chaleur. Ceci permet de limiter la rigidité locale liée à la présence d'une succession de barres de fermeture dans un échangeur de chaleur. Ceci permet également d'homogénéiser la structure du faisceau.

Avantageusement et selon l'invention, chaque plaque latérale d'encapsulage est fixée, par exemple soudée, aux plaques externes à leurs extrémités latérales, ce qui permet à chaque plaque d'être désolidarisée du faisceau. Chaque plaque latérale d'encapsulage n'est donc pas fixée (ni soudée) auxdites plaques internes.

Un échangeur de chaleur selon l'invention comprend donc un passage, dite passe du premier fluide, permettant la circulation d'un flux du premier fluide entre une première entrée et une première sortie dudit bloc échangeur.

Un échangeur de chaleur selon l'invention comprend un passage, dite passe du deuxième fluide, permettant la circulation d'un flux du deuxième fluide entre une deuxième entrée et une deuxième sortie dudit bloc échangeur.

Avantageusement et selon l'invention, chaque plaque latérale d'encapsulage présente une portion principale plane de forme rectangulaire.

Avantageusement et selon l'invention, chaque plaque latérale d'encapsulage présente au moins un premier épaulement longitudinal adapté pour pouvoir former une bordure pour une entrée et/ou une sortie dudit deuxième fluide.

Avantageusement et selon l'invention chaque plaque latérale d'encapsulage présente au moins un deuxième épaulement longitudinal adapté pour pouvoir s'étendre au contact d'une bordure pour une entrée et/ou une sortie dudit premier fluide.

Avantageusement et selon l'invention, chaque plaque latérale d'encapsulage s'étend en regard d'une face dudit bloc échangeur à plaques dénuée de barres de fermeture de ladite deuxième passe, ladite face étant munie de barres de fermeture de ladite première passe.

Chaque plaque latérale d'encapsulage peut être positionnée au contact ou non des plaques internes. Avantageusement et selon l'invention, chaque plaque latérale d'encapsulage est configurée pour ne pas être en contact avec les plaques internes. En alternative, selon une autre variante d'un échangeur à plaques selon l'invention, chaque plaque latérale d'encapsulage est configurée pour être au contact avec les plaques internes. Cette dernière variante de réalisation est particulièrement avantageuse en terme de tenue mécanique, notamment vis-à-vis de sollicitations mécaniques ou de certaines contraintes mécaniques.

Un échangeur de chaleur selon l'invention peut présenter différentes configurations de circulation du premier fluide et du deuxième fluide au sein du bloc échangeur. Il est possible d'utiliser un bloc échangeur dans lequel le flux de l'un et/ou de l'autre du premier ou du deuxième fluide caloporteur suit un parcours en U ou encore en S ou en Z. Avantageusement et selon l'invention, l'échangeur de chaleur selon l'invention est configuré pour un échange thermique à contre-courants entre ledit premier fluide circulant dans la première passe et ledit deuxième fluide circulant dans la deuxième passe. Rien n'empêche également de prévoir un échangeur de chaleur présentant une portion au sein de laquelle l'échange thermique est du type à co-courants, c'est-à-dire que les flux du premier fluide et du deuxième fluide suivent des directions parallèles identiques l'une de l'autre.

Avantageusement et selon l'invention, ledit premier fluide circule entre lesdites plaques internes selon une direction principale de circulation dudit premier fluide. Avantageusement et selon l'invention, ledit deuxième fluide circule entre lesdites plaques internes selon une direction principale de circulation dudit deuxième fluide. Avantageusement et selon l'invention, chaque plaque latérale d'encapsulage est configurée de façon à s'étendre selon un plan parallèle à ladite direction principale de circulation dudit premier fluide et/ou à ladite direction principale de circulation dudit deuxième fluide.

Avantageusement et selon l'invention, ledit échangeur de chaleur selon l'invention comprend deux plaques latérales d'encapsulage.

Le deuxième fluide caloporteur correspond par exemple au fluide caloporteur dont la température est inférieure à la température du premier fluide, ou inversement. En d'autres termes, le premier fluide peut être dénommé le fluide « chaud » et le deuxième fluide peut être dénommé le fluide « froid ».

Avantageusement et selon l'invention, chaque fluide peut être sous forme liquide ou gazeuse. En particulier, l'état du premier fluide peut être identique ou différent de l'état du deuxième fluide. Avantageusement et selon l'invention, le premier fluide et le deuxième fluide sont sous forme gazeuse.

Des guides-flux peuvent être intercalés entre les plaques internes du bloc échangeur. Chaque guide-flux peut présenter une forme ondulée, la hauteur des ondulations étant sensiblement égale à la distance entre plaques internes. Ainsi, chaque guide-flux présente une pluralité de zones externes et de zones internes en contact de surface avec la face intérieure des plaques internes. Chaque guide-flux peut présenter une pluralité d'ondulations de façon à former une pluralité de canaux de circulation du premier fluide et du deuxième fluide dans le bloc échangeur. Chaque guide-flux peut présenter un profil ondulé régulièrement selon une forme périodique, par exemple du type sinusoïdal ou crénelé.

Chaque guide-flux peut être solidarisé avec les plaques internes par une pluralité de contacts surfaciques. En particulier, chaque guide-flux peut être solidarisé avec les plaques internes par exemple par brasage ou par soudure.

L'échangeur de chaleur selon l'invention peut être formé en au moins un matériau choisi parmi les matériaux métalliques, les matériaux composites, les matériaux polymères, les matériaux céramiques, notamment le graphite, le verre... En particulier, dans un mode de réalisation particulièrement avantageux d'un échangeur de chaleur selon l'invention, les plaques sont formées en matériau métallique, notamment en au moins un matériau choisi dans le groupe formé des aciers, du cuivre, de l'aluminium, des alliages métalliques (superalliages notamment) et de leurs mélanges.

L'invention s'étend à un système de conditionnement d'air comprenant au moins un échangeur de chaleur selon l'invention. Il peut notamment s'agir d'un échangeur sans contact à contre courants ou encore à circulation en U ou en Z.

L'invention s'étend à un véhicule, notamment un aéronef, comprenant au moins un système de conditionnement d'air selon l'invention.

L'invention concerne aussi un échangeur de chaleur, un système de conditionnement d'air et un véhicule comprenant au moins un tel système de conditionnement d'air caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique partielle en perspective d'un échangeur de chaleur selon l'invention,
[Fig. 2] est une vue schématique partielle en perspective d'un échangeur de chaleur selon l'invention,
[Fig. 3] est une vue schématique en coupe d'un échangeur de chaleur selon l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

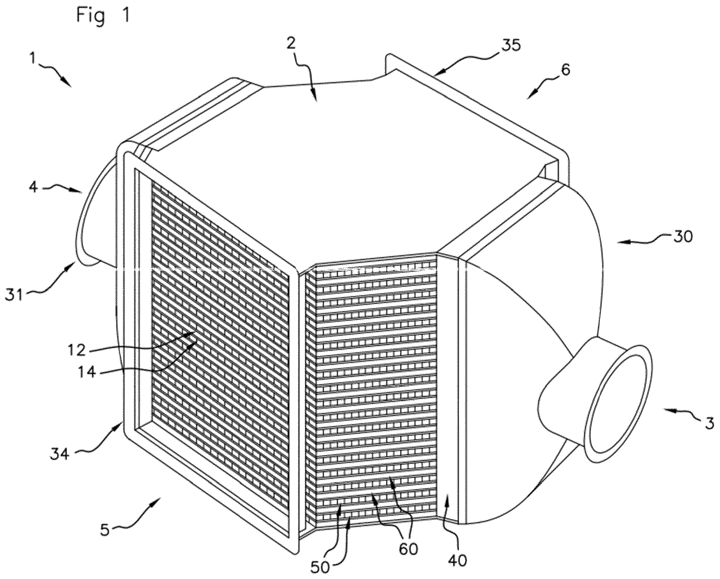

La figure 1 illustre schématiquement un échangeur 1 de chaleur à plaques, configuré pour un échange thermique entre un premier fluide circulant dans une première passe et un deuxième fluide circulant dans une deuxième passe. L'échangeur 1 de chaleur comprend deux plaques externes 2 entre lesquelles sont disposées les plaques.

Le bloc échangeur à plaques comprend un empilement de plaques internes planes entre chacune desquelles sont intercalés des guides-flux sous la forme de tôles ondulées. Un premier et un deuxième fluide circulent dans les espaces entre les plaques internes.

Les plaques internes sont disposées parallèlement les unes avec les autres. Le premier fluide circule entre une première entrée 3 et une première sortie 4. Le deuxième fluide circule entre une deuxième entrée 5 et une deuxième sortie 6.

L'échangeur de chaleur 1 comprend deux plaques 20 latérales d'encapsulage s'étendant chacune sensiblement orthogonalement aux plaques internes 12, 14. Chaque plaque 20 latérale d'encapsulage est fixée au contact des plaques externes 2 de façon à obturer la deuxième passe.

Chaque plaque 20 latérale d'encapsulage est soudée entre les plaques externes 2 sur les bordures de faisceau de l'échangeur (couramment appelées « core-band » en anglais), ce qui permet à chaque plaque d'être désolidarisée du faisceau au contraire des barres de fermeture utilisées dans un échangeur de chaleur selon l'état de la technique, chaque plaque 20 latérale d'encapsulage n'étant pas fixée (et donc non soudées notamment) aux plaques internes.

Le premier fluide est par exemple le fluide dit « chaud » et circule dans la passe chaude (première passe) tandis que le deuxième fluide est le fluide dit « froid » circulant dans la passe froide (deuxième passe).

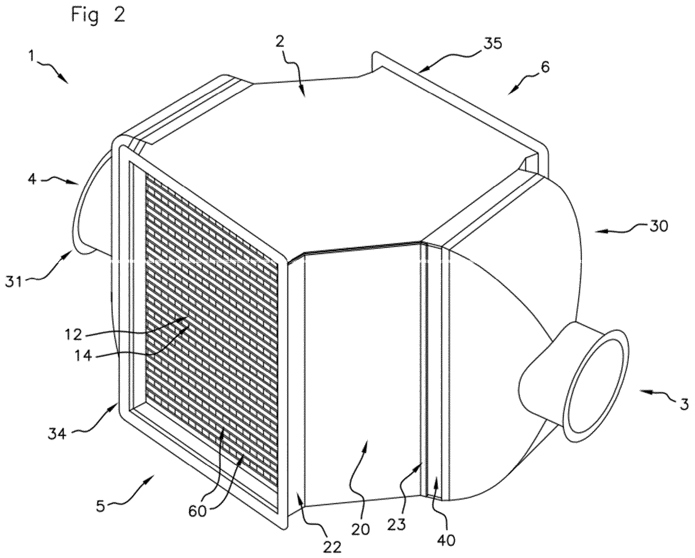

Comme on peut le voir sur la figure 2, chaque plaque 20 latérale d'encapsulage présente une portion principale plane de forme rectangulaire et deux épaulements 22, 23 le long d'arêtes opposées l'une à l'autre de la portion principale :
un premier épaulement 22 longitudinal forme une bordure pour une entrée et/ou une sortie dudit deuxième fluide.
un deuxième épaulement 23 longitudinal est adapté pour pouvoir s'étendre au contact d'une bordure 40 de faisceau pour une entrée ou une sortie du premier fluide.

Le premier épaulement 22 de la plaque 20 latérale d'encapsulage forme une bordure de faisceau au niveau de l'entrée de la passe froide sur laquelle peut être fixée un cadre ou une boîte d'entrée du fluide froid.

Chaque plaque 20 latérale d'encapsulage s'étend en regard d'une face du bloc échangeur à plaques dénuée de barres de fermeture de la deuxième passe mais munie uniquement de barres 60 de fermeture de la première passe. Comme on peut le voir sur la figure 1, la deuxième passe, dans ces portions, présente des couches 50 dénuées de barres de fermeture. Dans le mode de réalisation illustré, les plaques latérales d'encapsulage permettent donc de supprimer les barres de fermeture dites « froides » des faces ou portions du bloc échangeur au travers desquelles il n'est pas prévu une entrée ou une sortie pour la passe chaude ou pour la passe froide. L'invention permet donc de supprimer les murs de barres (ou de barrettes) de fermetures formés d'une succession de barres de fermeture correspondant aux passes chaude et froide.

En position finale, après avoir été fixées, par exemple par soudure, aux plaques externes 2, les plaques 20 latérales d'encapsulage n'ont pas besoin d'être au contact des extrémités des plaques internes.

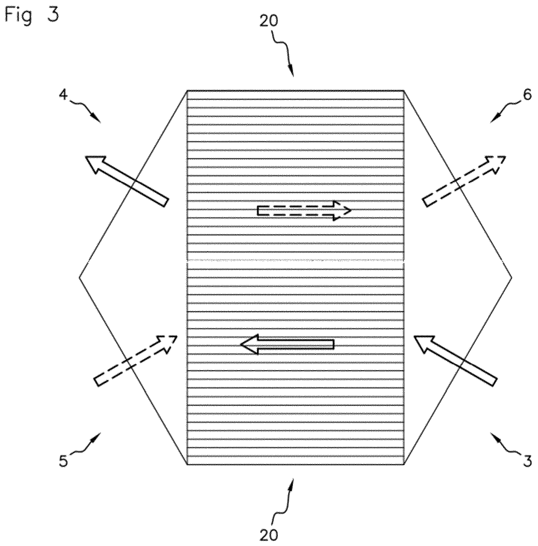

L'échangeur de chaleur représenté aux figures 1 à 3 est du type à contre-courants. Comme on peut le voir sur la figure 3 (coupe longitudinale de l'échangeur selon un plan parallèle aux plaques internes), une portion à contre-courants s'étend entre les deux plaques 20 d'encapsulage, le premier et le deuxième fluide suivant chacun un parcours en Z. Tout autre type de configuration du parcours des fluides est bien sûr également possible, un circuit en U par exemple.

Dans le mode de réalisation illustré, le bloc échangeur à plaques présente une forme générale de prisme droit à base hexagonale et présente donc huit faces principales, deux de ces faces étant formées par les deux plaques externes 2 et deux autres de ces faces étant formées par les deux plaques 20 latérales d'encapsulage.

Dans le mode de réalisation illustré, la première entrée 3 présente une bouche d'entrée du premier fluide ménagée dans une boîte 30 d'entrée. De même, la première sortie 4 présente une bouche de sortie ménagée dans une boîte 31 de sortie du premier fluide hors du bloc échangeur. Chaque bouche présente un seul (unique) orifice formant entrée ou sortie, une ouverture vers le bloc échangeur à plaques, et une paroi pleine périphérique entre cet orifice et cette ouverture. Chaque orifice de chaque bouche peut être connecté à un conduit d'arrivée ou d'évacuation du premier fluide.

Dans le mode de réalisation illustré, les boîtes 30, 31 sont soudées sur les bordures 40 de faisceau dites « chaudes » de l'échangeur.

Dans le mode de réalisation illustré, un cadre 34 d'entrée est fixé au niveau de la deuxième entrée 5 et un cadre 35 de sortie est fixé au niveau de la deuxième sortie 6.

Un échangeur de chaleur selon l'invention permet de supprimer efficacement les risques de fuite dans un bloc échangeur. Un échangeur de chaleur selon l'invention permet de supprimer la soudure d'une des deux bordures du faisceau, libérant ainsi deux des six angles du faisceau.

L'invention ne se limite pas aux modes de réalisation décrits précédemment. En particulier, les plaques latérales d'encapsulage, les barres de fermeture, les bordures de faisceau et les collecteurs peuvent avoir des formes différentes. Les circuits de circulation d'air chaud peuvent, comme déjà décrit, avoir des formes différentes de celles représentées.

## Revendications

1. Échangeur (1) de chaleur à plaques, configuré pour un échange thermique entre un premier fluide circulant dans une première passe et un deuxième fluide circulant dans une deuxième passe, les fluides circulant entre deux plaques externes (2), comprenant :
un bloc échangeur à plaques comprenant une pluralité de plaques internes (12, 14) disposées sensiblement parallèlement les unes par rapport aux autres, lesdites plaques internes étant disposées sensiblement parallèlement aux plaques externes (2), ledit premier fluide et ledit deuxième fluide circulant dans des espaces entre lesdites plaques internes,
**caractérisé en ce qu'**il comprend au moins une plaque (20) latérale d'encapsulage s'étendant sensiblement orthogonalement auxdites plaques internes, chaque plaque latérale d'encapsulage étant fixée au contact desdites plaques externes (2) de façon à obturer latéralement ladite deuxième passe,
chaque plaque (20) latérale d'encapsulage s'étendant en regard d'une face dudit bloc échangeur à plaques dénuée de barres de fermeture de ladite deuxième passe, ladite face étant munie de barres (60) de fermeture de ladite première passe.

2. Échangeur selon la revendication 1, **caractérisé en ce que** chaque plaque (20) latérale d'encapsulage présente une portion principale plane de forme rectangulaire.

3. Échangeur selon l'une des revendications 1 ou 2, **caractérisé en ce que** chaque plaque (20) latérale d'encapsulage présente au moins un premier épaulement (22) longitudinal adapté pour pouvoir former une bordure pour une entrée (5) dudit deuxième fluide et/ou une sortie (6) dudit deuxième fluide.

4. Échangeur selon l'une des revendications 1 à 3, **caractérisé en ce que** chaque plaque (20) latérale d'encapsulage présente au moins un deuxième épaulement (23) longitudinal adapté pour pouvoir s'étendre au contact d'une bordure (40) pour une entrée (3) et/ou une sortie (4) dudit premier fluide.

5. Échangeur selon l'une des revendications 1 à 4, **caractérisé en ce que** chaque plaque (20) latérale d'encapsulage est configurée pour ne pas être en contact avec les plaques internes.

6. Échangeur selon l'une des revendications 1 à 5, **caractérisé en ce qu'**il est configuré pour un échange thermique à contre-courants entre ledit premier fluide circulant dans la première passe et ledit deuxième fluide circulant dans la deuxième passe.

7. Échangeur selon l'une des revendications 1 à 6, **caractérisé en ce qu'**il comprend deux plaques (20) latérales d'encapsulage.

8. Système de conditionnement d'air **caractérisé en ce qu'**il comprend au moins un échangeur de chaleur selon l'une des revendications 1 à 7.

9. Véhicule -notamment aéronef- **caractérisé en ce qu'**il comprend au moins un système de conditionnement d'air selon la revendication 8.

## Patentansprüche

1. Plattenwärmetauscher (1), der für einen Wärmeaustausch zwischen einem in einem ersten Durchgang strömenden ersten Fluid und einem in einem zweiten Durchgang strömenden zweiten Fluid ausgelegt ist, wobei die Fluide zwischen zwei Außenplatten (2) strömen, welcher umfasst:
einen Plattenwärmetauscherblock mit mehreren Innenplatten (12, 14), die im Wesentlichen parallel zueinander angeordnet sind, worin die Innenplatten im Wesentlichen parallel zu den Außenplatten (2) angeordnet sind und das erste Fluid und das zweite Fluid in Zwischenräumen zwischen den Innenplatten strömen,
**dadurch gekennzeichnet, dass** dieser mindestens eine seitliche Kapselungsplatte (20) umfasst, die sich im Wesentlichen orthogonal zu den Innenplatten erstreckt, wobei jede seitliche Kapselungsplatte in Kontakt mit den Außenplatten (2) befestigt ist, um den zweiten Durchgang seitlich zu verschließen,
worin sich jede seitliche Kapselungsplatte (20) gegenüber einer Fläche des Plattenwärmetauscherblocks erstreckt, die keine Stäbe aufweist, die den zweiten Durchgang verschließen, wobei die Fläche mit Stäben (60) versehen ist, die den ersten Durchgang verschließen.

2. Wärmetauscher nach Anspruch 1, **dadurch gekennzeichnet, dass** jede seitliche Kapselungsplatte (20) einen rechteckigen, ebenen Hauptabschnitt aufweist.

3. Wärmetauscher nach einem der Ansprüche 1 oder 2, **dadurch gekennzeichnet, dass** jede seitliche Kapselungsplatte (20) mindestens eine erste Längsschulter (22) aufweist, die so geformt ist, ein Band für einen Einlass (5) für das zweite Fluid und/oder einen Auslass (6) für das zweite Fluid zu bilden.

4. Wärmetauscher nach einem der Ansprüche 1 bis 3, **dadurch gekennzeichnet, dass** jede seitliche Kapselungsplatte (20) mindestens eine zweite Längsschulter (23) aufweist, die so geformt ist, sich in Kontakt mit einem Band (40) für einen Einlass (3) und/oder einen Auslass (4) für das erste Fluid zu erstrecken.

5. Wärmetauscher nach einem der Ansprüche 1 bis 4, **dadurch gekennzeichnet, dass** jede seitliche Kapselungsplatte (20) ausgestaltet ist, nicht mit den Innenplatten in Kontakt zu stehen.

6. Wärmetauscher nach einem der Ansprüche 1 bis 5, **dadurch gekennzeichnet, dass** dieser für einen Gegenstrom-Wärmeaustausch zwischen dem in dem ersten Durchgang strömenden ersten Fluid und dem in dem zweiten Durchgang strömenden zweiten Fluid ausgestaltet ist.

7. Wärmetauscher nach einem der Ansprüche 1 bis 6, **dadurch gekennzeichnet, dass** dieser zwei seitliche Kapselungsplatten (20) umfasst.

8. Klimaanlage, **dadurch gekennzeichnet, dass** diese mindestens einen Wärmetauscher gemäß einem der Ansprüche 1 bis 7 umfasst.

9. Fahrzeug - insbesondere ein Flugzeug - **dadurch gekennzeichnet, dass** dieses mindestens eine Klimaanlage gemäß Anspruch 8 umfasst.

## Claims

1. Plate heat exchanger (1), configured for a heat exchange between a first fluid flowing in a first pass and a second fluid flowing in a second pass, the fluids flowing between two external plates (2), comprising:
a plate exchanger block comprising a plurality of internal plates (12, 14) arranged substantially in parallel with each other, said internal plates being arranged substantially in parallel with the external plates (2), said first fluid and said second fluid flowing in spaces between said internal plates,
**characterized in that** it comprises at least one lateral encapsulation plate (20) extending substantially orthogonally to said internal plates, each lateral encapsulation plate being fixed in contact with said external plates (2) so as to laterally close said second pass,
each lateral encapsulation plate (20) extending facing a face of said plate exchanger block having no bars closing said second pass, said face being provided with bars (60) closing said first pass.

2. Exchanger as claimed in claim 1, **characterized in that** each lateral encapsulation plate (20) has a main, rectangular, planar portion.

3. Exchanger as claimed in any one of claims 1 or 2, **characterized in that** each lateral encapsulation plate (20) has at least one first longitudinal shoulder (22) shaped to be able to form a band for an inlet (5) for said second fluid and/or an outlet (6) for said second fluid.

4. Exchanger as claimed in any one of claims 1 to 3, **characterized in that** each lateral encapsulation plate (20) has at least one second longitudinal shoulder (23) shaped to be able to extend in contact with a band (40) for an inlet (3) and/or an outlet (4) for said first fluid.

5. Exchanger as claimed in any one of claims 1 to 4, **characterized in that** each lateral encapsulation plate (20) is configured so as not to be in contact with the internal plates.

6. Exchanger as claimed in any one of claims 1 to 5, **characterized in that** it is configured for a counterflow heat exchange between said first fluid flowing in the first pass and said second fluid flowing in the second pass.

7. Exchanger as claimed in any one of claims 1 to 6, **characterized in that** it comprises two lateral encapsulation plates (20).

8. Air-conditioning system **characterized in that** it comprises at least one heat exchanger as claimed in any one of claims 1 to 7.

9. Vehicle - in particular an aircraft - **characterized in that** it comprises at least one air-conditioning system as claimed in claim 8.
